# EUROPEAN PATENT APPLICATION

(11) **EP 4 752 425 A1**
(43) Date of publication of application: **03.06.2026**
(21) Application number: 25213427.5
(22) Date of filing: 04.11.2025
(51) Int. Cl.: F16N 11/08, F16N 13/04, F16N 13/22

(54) **MULTI-FUNCTION AUTOMATIC GREASE INJECTION PUMP INCLUDING MULTIPLE DISCHARGE PORTS AND HAVING INDEPENDENTLY DRIVEN MULTI-STAGE STRUCTURE**

(30) Priority: 28.11.2024 KR 20240173481
(71) Applicant: Ahwon Corporation, Gunpo-si, Gyeonggi-do 15847 (KR)
(72) Inventor: LEE, Juho, Gunpo-si (KR)
(74) Representative: Eder, Michael

(57) **Abstract**

According to an embodiment of the present disclosure, a multi-function automatic grease injection pump including multiple discharge ports and having an independently driven multi-stage structure includes: a pump body; a pump element installed in the pump body, configured to discharge grease through a discharge port, and having an independently driven multi-stage structure in a vertical or horizontal direction; a cam piston unit having an independently driven multi-stage structure corresponding to the pump element, and having a counter-rotation prevention structure that operates in only one direction according to each of set directions; a driving unit for driving the cam piston unit; and a grease container filled with the grease to store the grease, and including a grease agitation unit for agitating the grease, wherein, when the pump element in one stage operates, the pump element in another stage does not operate so as to be in a stationary state.

## Description

### BACKGROUND OF THE INVENTION

### 1. Field of the Invention

One aspect of the present disclosure relates to a multi-function automatic grease injection pump, and more particularly, to a multi-function automatic grease injection pump including multiple discharge ports and having an independently driven multi-stage structure, capable of controlling a discharge amount, a discharge pressure, and a discharge operation of grease, and enabling selective use of a plurality of discharge ports.

### 2. Description of the Related Art

Today, excavators are developing into expensive multi-function multi-attachment equipment. However, in reality, lubrication devices that have significant influences on performance and lifespans of excavators are limitedly supplied to either an equipment body lubrication function or an attachment lubrication function.

In particular, while selection of various multi-function attachments is rapidly developing for medium and small wheeled excavators, regarding automatic lubrication devices, conventional and general manual or equipment body-oriented centralized automatic grease injectors and attachment-dedicated injectors are separately selected and used with separate pumps that satisfy corresponding lubrication requirements, respectively.

Such reality inevitably involves decreased equipment operating rates, increased costs, and shortened lifespans of excavators and attachments, which in tum leads to a decrease in equipment costeffectiveness.

To solve such problems, there is a growing need for a multi-function automatic grease injection pump for a wheeled excavator, 1) capable of supplying grease to an excavator body in which a centralized automatic injection device is easily installed by using a centralized automatic grease injection system, 2) capable of supplying grease to a lower portion of the excavator and an attachment, which are separated from the excavator body so as to rotate, by using a separate grease gun since the centralized automatic grease injection system may not be connected, and 3) capable of injecting an extremely low amount of grease into an attachment (e.g., a hydraulic breaker), which is coupled to the excavator body so as not to rotate, and requires continuous injection of a low amount of grease during operation.

### [Documents of Related Art]

### [Patent Documents]

(Patent Document 1) Korean Unexamined Patent Publication No. 10-2005-0098817 (published on October 12, 2005), "Remote Grease Injection Device for Heavy Equipment"
(Patent Document 2) Korean Patent Registration No. 10-1364760 (published on February 20, 2014), "Grease Supply System for Multi-function Excavator"

### SUMMARY OF THE INVENTION

To solve the problems described above, an object of the present disclosure is to provide a multi-function automatic grease injection pump including multiple discharge ports and having an independently driven multi-stage structure, capable of controlling a discharge amount, a discharge pressure, and a discharge operation of grease, and enabling selective use of a plurality of discharge ports, by forming at least two pump elements and cam piston units in independently driven multi-stage structures, and allowing the pump elements to be operated by the cam piston units that rotate in different directions, respectively.

To achieve the object described above, according to the present disclosure, there is provided a multi-function automatic grease injection pump including multiple discharge ports and having an independently driven multi-stage structure, the multi-function automatic grease injection pump including: a pump body; a pump element installed in the pump body, configured to discharge grease through a discharge port, and having an independently driven multi-stage structure in a vertical or horizontal direction; a cam piston unit having an independently driven multi-stage structure corresponding to the pump element, and having a counter-rotation prevention structure that operates in only one direction according to each of set directions; a driving unit for driving the cam piston unit; and a grease container filled with the grease to store the grease, and including a grease agitation unit for agitating the grease, wherein, when the pump element in one stage operates, the pump element in another stage does not operate so as to be in a stationary state.

In addition, the pump element may include a first stage pump element and a second stage pump element, each of the first stage pump element and the second stage pump element may constitute one or a plurality of pump elements, and the discharge port may have one or a plurality of discharge duct paths.

In addition, a direction change valve may be mounted on the discharge port, and, when a corresponding control mode is selected, a grease discharge amount may be automatically changed while a direction of a grease discharge duct path is changed.

In addition, a heat generation device for generating heat may be formed at a periphery of a suction port of the pump element, and the heat generation device may constantly generate heat having a predetermined temperature or more to maintain the grease at a predetermined viscosity so that no problem is caused by a variation in a grease viscosity even in extremely cold regions when the pump element operates.

In addition, a discharge pressure overload adjustment valve may be formed adjacent to the pump element, and, when a back pressure corresponding to a predetermined pressure or more is generated in the pump element, the grease may be forcibly recovered into the container through the discharge pressure overload adjustment valve.

In this case, an indicator pin capable of performing notification to an outside may be mounted.

In addition, a level sensor unit for detecting a grease level inside the grease container may be formed in an agitator of the grease agitation unit, and, the level sensor unit may detect whether the grease level becomes less than or equal to a predetermined level so as to emit a signal.

In addition, when a combination of pump elements is configured in the horizontal direction, different discharge schemes (e.g., a high-volume grease spraying and low-volume discharge system, etc.) and functions may be maintained for different types of grease.

According to the multi-function automatic grease injection pump including the multiple discharge ports and having the independently driven multi-stage structure of the present disclosure, only a pump element in one stage selected among a plurality of pump elements may operate, so that various grease discharge amounts (high volume, medium volume, and low volume) can be selectively used.

According to the multi-function automatic grease injection pump including the multiple discharge ports and having the independently driven multi-stage structure of the present disclosure, the selected pump element in one stage can transfer a selected discharge amount of grease to one or a plurality of discharge ports according to purposes, a grease discharge amount and a grease discharge pressure can vary, and a discharge pipe direction and a discharge scheme of the grease can be changed.

According to the multi-function automatic grease injection pump including the multiple discharge ports and having the independently driven multi-stage structure of the present disclosure, a selected amount of grease (medium volume) can be centrally injected into an excavator body, a large amount of grease (high volume) can be injected into a lower portion of an excavator and a rotary attachment unit by using a grease gun within a short time, and a low amount of grease (low volume) can be continuously injected into a fixed attachment that is operating.

### BRIEF DESCRIPTION OF THE DRAWINGS

FIG. 1 is a perspective view showing a multi-function automatic grease injection pump having an independently driven multi-stage structure according to an embodiment of the present disclosure.
FIG. 2 is an exemplary view showing a flow of grease by cutting the multi-function automatic grease injection pump having the independently driven multi-stage structure according to the embodiment of the present disclosure.
FIG. 3 is an assembly view showing a pump element and a cam piston unit of the multi-function automatic grease injection pump having the independently driven multi-stage structure according to the embodiment of the present disclosure.
FIG. 4 is a sectional view showing the pump element and the cam piston unit of the multi-function automatic grease injection pump having the independently driven multi-stage structure according to the embodiment of the present disclosure.
FIG. 5 is an assembly view showing a pump body and a discharge pressure overload adjustment valve of the multi-function automatic grease injection pump having the independently driven multi-stage structure according to the embodiment of the present disclosure.
FIG. 6 is a sectional view showing the pump body and the discharge pressure overload adjustment valve of the multi-function automatic grease injection pump having the independently driven multi-stage structure according to the embodiment of the present disclosure.
FIG. 7 is an assembly view showing the pump body and a level sensor unit of the multi-function automatic grease injection pump having the independently driven multi-stage structure according to the embodiment of the present disclosure.
FIG. 8 is a sectional view showing the pump body and the level sensor unit of the multi-function automatic grease injection pump having the independently driven multi-stage structure according to the embodiment of the present disclosure.
FIG. 9 is an assembly view showing the pump body and a grease injection unit of the multi-function automatic grease injection pump having the independently driven multi-stage structure according to the embodiment of the present disclosure.
FIG. 10 is a sectional view showing the pump body and the grease injection unit of the multi-function automatic grease injection pump having the independently driven multi-stage structure according to the embodiment of the present disclosure.

### DETAILED DESCRIPTION OF THE INVENTION

The following detailed descriptions of the present disclosure are given for embodiments in which the present disclosure may be practiced, and refer to the accompanying drawings that illustrate the embodiments. These embodiments are described in sufficient detail to enable those skilled in the art to practice the present disclosure. It is to be understood that various embodiments of the present disclosure are different from each other, but need not be mutually exclusive. For example, specific shapes, structures, and characteristics described herein may be implemented and changed from one embodiment to another embodiment without departing from the idea and scope of the present disclosure. In addition, it is to be understood that positions or arrangements of individual elements in each embodiment described herein may be changed without departing from the idea and scope of the present disclosure.

Therefore, the following detailed description is not to be taken in a limiting sense, and the scope of the present disclosure is defined only by the appended claims while encompassing the scope of all equivalents of the claimed disclosure when appropriately described. In the drawings, like reference numerals refer to elements that perform the same or similar functions across various aspects.

Regarding the terms used herein, general terms that are currently used as widely as possible are selected in consideration of functions thereof in the present disclosure. However, the terms may vary according to the intention of those skilled in the art, judicial precedents, the emergence of new technologies, and the like. **In** addition, in certain cases, a term may be selected at discretion of the applicant. In this case, the meaning of the term will be described in detail at a corresponding part in the description of the invention. Therefore, the terms used herein are to be defined based on the meanings of the terms and the overall contents of the present disclosure without being simply limited to names of the terms.

In the present disclosure, when some part "includes" some elements, unless explicitly described to the contrary, it means that other elements may be further included but not excluded.

Automatic grease pumps for excavators may be generally classified into a centralized automatic grease pump (automatic lubrication system) that performs body-oriented grease injection, an individual manual or semi-automatic grease gun (semi-automatic gun system) that injects grease into a lower portion of equipment or entire equipment, and an individual automatic pump (attachment lubrication system) that injects grease into an attachment according to a grease selection criterion.

In general, a lubrication region of the equipment is classified into the body and the attachment, and the grease is periodically injected into a body lubrication region of the equipment automatically or manually during use of the equipment. For some attachments, special grease that varies in type according to structures, performance, and operating conditions of the attachments is periodically injected automatically or manually by using an individual grease pump.

Accordingly, a multi-function automatic grease injection pump having an independently driven multi-stage structure according to the present disclosure is to be collectively used in an equipment body, the lower portion of the equipment, and the attachment.

In a high-volume grease discharge mode (high volume mode), since the grease has to be injected into the lower portion of the equipment within a short time, the grease may be injected by using a separate grease pump or separately injected by using a manual grease gun. Accordingly, according to the present grease pump, when the high-volume grease discharge mode is selected, a first stage pump element may discharge a large amount of grease so that a work may be completed within a short time. In this case, a second stage pump element may not operate so as to be on standby in a stationary state.

In a medium-volume grease discharge mode (medium volume mode), a selected appropriate amount of grease may be automatically injected to each individual grease injection point of an equipment body part through a distribution port by using the second stage grease pump element, which is a general centralized grease pump. In this case, the first stage pump element may not operate so as to be on standby in a stationary state.

In a low-volume mode (low volume mode), there may be several types of attachments of the equipment according to functions of the attachments, and the attachments may be classified into an attachment having a structure that may be integrated into a centralized grease injector for use, and an attachment having a rotary structure that requires independent grease injection according to a predetermined structure. For example, although a rotary tilt-rotate hydraulic breaker may be integrated into a centralized grease injector for use, the rotary tilt-rotate hydraulic breaker may have a grease injection amount and a grease injection period, which are significantly different from a grease injection amount and a grease injection period of a centralized grease pump, so that the rotary tilt-rotate hydraulic breaker and the centralized grease pump may not by simultaneously connected and used in combination. Therefore, in this case, through the second stage element with a different control mode and a direction change valve connected to an outside, the grease may be directly supplied to the breaker through a separate breaker pipe, rather than a centralized pipe, and a grease discharge amount may be controlled to a low amount according to a selected mode.

In this case, the first stage pump element may stop operating so as to be switched to a standby state, the second stage pump element may discharge a low discharge amount of grease according to the selected control mode, and the direction change valve of the discharge port may switch a duct path from the centralized pipe to the breaker pipe.

Hereinafter, a multi-function automatic grease injection pump including multiple discharge ports and having an independently driven multi-stage structure according to an embodiment of the present disclosure will be described in detail with reference to the accompanying drawings.

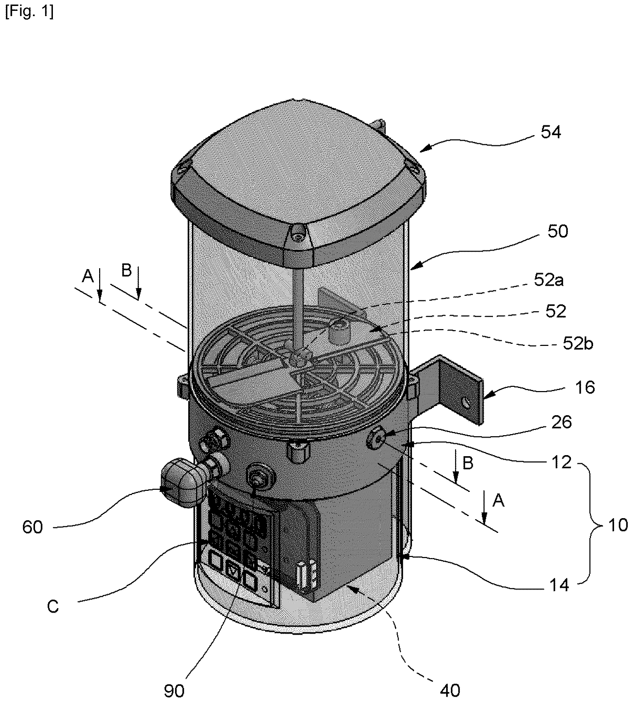

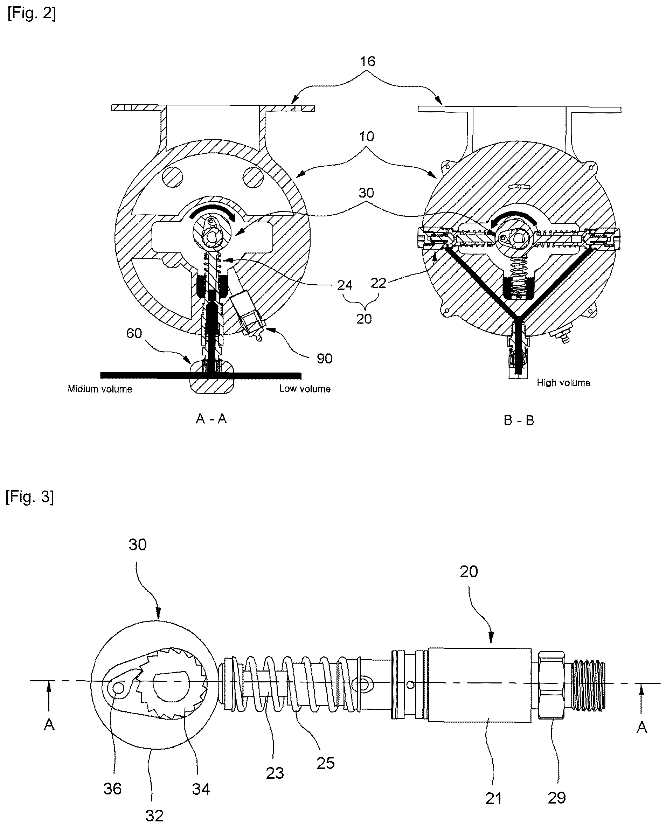

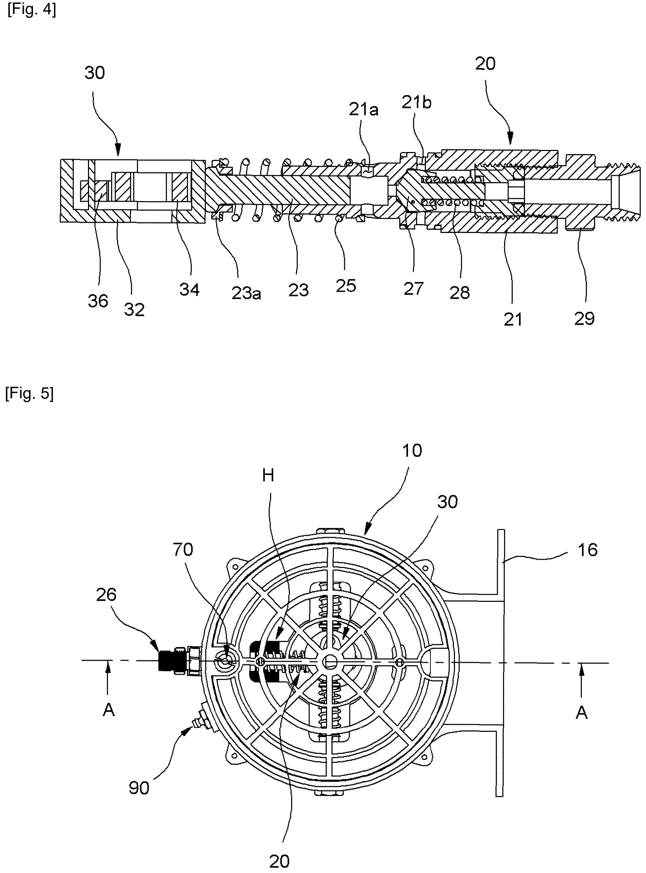

FIG. 1 is a perspective view showing a multi-function automatic grease injection pump having an independently driven multi-stage structure according to an embodiment of the present disclosure, FIG. 2 is an exemplary view showing a flow of grease by cutting the multi-function automatic grease injection pump having the independently driven multi-stage structure according to the embodiment of the present disclosure, FIG. 3 is an assembly view showing a pump element and a cam piston unit of the multi-function automatic grease injection pump having the independently driven multi-stage structure according to the embodiment of the present disclosure, and FIG. 4 is a sectional view showing the pump element and the cam piston unit of the multi-function automatic grease injection pump having the independently driven multi-stage structure according to the embodiment of the present disclosure.

According to the embodiment of the present disclosure, as shown in the drawings, a multi-function automatic grease injection pump including multiple discharge ports and having an independently driven multi-stage structure may include: a pump body 10; a pump element 20 installed in the pump body 10, configured to discharge grease through a discharge port 26, and having an independently driven multi-stage structure in a vertical or horizontal direction; a cam piston unit 30 having an independently driven multi-stage structure corresponding to the pump element 20, and having a counter-rotation prevention structure that operates in only one direction according to each of set directions; a driving unit 40 for driving the cam piston unit 30; and a grease container 50 filled with the grease to store the grease, and including a grease agitation unit 52 for agitating the grease.

The pump body 10 may be a configuration for protect the pump element 20, the cam piston unit 30, and the driving unit40 installed inside the pump body 10. As shown in FIG. 1, the pump body 10 may include a first pump body 12 that surrounds the pump element 20 and the cam piston unit 30, and a second pump body 14 that surrounds the driving unit 40. The first pump body 12 and the second pump body 14 may be connected in a line in a longitudinal direction of the multi-function automatic grease injection pump having the independently driven multi-stage structure. The first pump body 12 and the second pump body 14 may be formed separately so as to be connected to each other as described above, or may be formed as one component.

Although the pump body 10 has been shown in the drawings of the multi-function automatic grease injection pump having the independently driven multi-stage structure according to the embodiment of the present disclosure as having a shape of a cylinder with a predetermined diameter and a predetermined height, the configuration is not limited thereto, and the pump body 10 may be modified in various shapes in consideration of usability, stability, connection relation between configurations, and the like.

Discharge ports 26 connected to a plurality of pump elements 20 may be formed on an outer side of the pump body 10, and each of the discharge ports 26 may be coupled to a grease gun, a grease injection point, or an attachment according to a discharge amount of the discharge port 26. Accordingly, a gun-type or AGS-type element assembly may be installed at an end portion in which the discharge port 26 is formed.

A support 16 may be formed on one side of the pump body 10, and the support 16 may be coupled to a surrounding structure so that the pump body 10 may be more stably fixed. In this case, preferably, a pair of supports 16 that are symmetrical to each other may be formed so as to be stably and fixedly coupled to the surrounding structure.

Meanwhile, a controller unit C may be formed on one side of the pump body 10. The controller unit C may control an overall operation of the multi-function automatic grease injection pump having the independently driven multi-stage structure, especially driving of a motor formed in the driving unit 40 that will be described below. The controller unit C may notify various operating functions to an outside, and may be connected to external power and control functions.

The controller unit C may control a discharge amount and a discharge pressure of grease and various configurations, and may select an operating mode of a pump, that is, a high-volume grease discharge mode (high volume mode), a medium-volume grease discharge mode (medium volume mode), a low-volume mode (low volume mode), and the like. In this case, preferably at least a portion of the controller unit C may be exposed to the outer side of the pump body 10 so that the controller unit C may be easily manipulated by a user.

The pump element 20 may be operated by the driving unit 40 so as to discharge a predetermined amount of grease through the discharge port 26.

As shown in FIG. 2, the pump element 20 may have an independently driven multi-stage structure in a vertical or horizontal direction. The pump element 20 may include a first stage pump element 22 and a second stage pump element 24, and each of the first stage pump element 22 and the second stage pump element 24 may be connected to the cam piston unit 30 and operated by cam piston units 30 that rotate in different directions.

The first stage pump element 22 and the second stage pump element 24 may have different discharge amounts and discharge pressures, and may selectively use a plurality of discharge ports 26. In other words, a plurality of pump elements 20 may have a structure that controls different discharge amounts and discharge pressures together with the cam piston units 30, and each of the pump elements 20 may discharge or spray the grease according to an assigned function thereof. **In** this case, the first stage pump element 22 may refer to a pump element 20 disposed in an upper portion among the pump elements 20 having the multi-stage structure, and the second stage pump element 24 may refer to a pump element 20 disposed in a lower portion among the pump elements 20 having the multi-stage structure.

One or a plurality of each of the first stage pump element 22 and the second stage pump element 24 of the pump element 20 may be provided, and the discharge port 26 may have one or a plurality of discharge duct paths. Each of the pump elements 20 having the multi-stage structure may operate such that only the pump element 20 fastened to the cam piston unit 30 in one stage may operate while the pump element 20 fastened to the cam piston unit 30 in remaining stages does not operate according to purposes.

According to the multi-function automatic grease injection pump having the independently driven multi-stage structure of the embodiment of the present disclosure, based on the pump element 20 having a two-stage vertical structure and the cam piston unit 30 having the counter-rotation prevention structure, the first stage pump element 22 and the second stage pump element 24 may interact with each other so that, when one pump element 20 operates, the remaining pump element 20 may not operate. For example, when the high-volume grease discharge mode (high volume mode) is selected through the controller unit C, the cam piston unit 30 may rotate to the left, and only the first stage pump element 22 among the pump elements 20 may operate so that a high amount of grease may be discharged through the discharge port 26. When the medium-volume grease discharge mode (medium volume mode) or the low-volume mode (low volume mode) is selected, the cam piston unit 30 may rotate to the right, and only the second stage pump element 24 among the pump elements 20 may operate so that a medium or low amount of grease may be discharged through a direction change valve 60 that will be described below.

Meanwhile, the direction change valve 60 for controlling a grease discharge direction of the pump element 20 may be formed. The direction change valve 60 may be mounted on the discharge port 26 of the pump element 20, and, when the operating mode is selected, the grease discharge amount may be automatically changed while a direction of a grease discharge duct path may be changed.

The direction change valve 60 may operate by changing and selecting a grease discharge amount control mode, thereby selecting a grease discharge amount and an operating mode appropriate for purposes thereof. In other words, when an electronic direction change valve 60 is installed on the discharge port 26 through which a medium amount of grease is discharged, and a low-volume grease discharge mode is selected, the grease discharge duct path and the discharge amount may be simultaneously changed so that operation may be performed on a selected lubricated region under optimal lubrication conditions.

As shown in FIGS. 3 and 4, the pump element 20 may be a configuration for sucking and discharging the grease stored in the grease container 50 through a reciprocating movement of a piston, and may include an element 21, a piston 23, a piston spring 25, a check pin 27, a check spring 28, and a pump straight fitting 29.

The element 21 may have a shape of a pipe having both sides that are open, in which the piston 23 may be inserted into one open side, and the pump straight fitting 29 may be inserted into an opposite open side. The check pin 27 and the check spring 28 may be installed in an inner space between the piston 23 and the straight fitting 29. In addition, a suction port 21a for sucking the grease and a high-pressure discharge port 21b for discharging high-pressure grease may be formed on one side of the element 21.

The piston 23 may linearly perform a reciprocating movement along the inner space of the element 21 so as to change a pressure inside the element 21, so that the grease sucked through the suction port 21a of the element 21 may be pushed to the discharge port 26. The piston 23 may have one end portion making contact with the cam piston unit 30 and elastically supported from the element 21 by the piston spring 25. The piston spring 25 may be installed on an outer side of the element 21 and the piston 23 to provide elasticity to the piston 23, in which the piston spring 25 may have one end portion fixed to the element 21 and an opposite end portion making contact with the piston 23 or a spring fixing guide 23a formed on the piston 23.

The check pin 27 may be a configuration installed in the inner space of the element 21 and configured to open and close an inner passage of the element 21. The check pin 27 may be elastically supported by the check spring 28, and may elastically move forward and backward by the change in the pressure inside the element 21. The pump straight fitting 29 may be a hollow tube, and may be coupled to the one open side of the element 21 so as to protrude outward from the pump body 10.

Meanwhile, a heat generation device H such as a heat dissipation plate may be formed at a periphery of the suction port 21a of the pump element 20. The heat generation device H may be coupled to the outer side of the element 21 that is adjacent to the suction port 21a while surrounding the outer side of the element 21, and may constantly generate heat having a predetermined temperature or more to maintain the grease sucked into the pump element 20 at a predetermined viscosity when the pump element 20 operates.

In other words, the grease may have a set use temperature according to a type. However, since an extemal temperature suddenly increases or decreases due to recent rapid environmental changes, even grease used at low temperatures may have difficulty in responding to such rapid environmental changes, so that an automatic grease pump that is once broken may not be immediately reused, and has to be repaired before use. Therefore, according to the multi-function automatic grease injection pump having the independently driven multi-stage structure of the embodiment of the present disclosure, the heat generation device H that uses heat generated during a motor operation may be installed in a region of the suction port 21a of the pump element 20, so that grease within a predetermined viscosity range may be constantly supplied when the motor operates, and thus the grease discharge amount may be stably maintained.

The cam piston unit 30 may have a multi-stage structure corresponding to the pump element 20, and may be configured as a ratchet type that operates in only one direction according to each of set directions. The cam piston unit 30 having the multi-stage structure may be connected to the pump element 20 having the multi-stage structure, and may rotate in different directions. As one end of the cam piston unit 30 is rotated by the driving unit 40, only the pump element 20 connected to the cam piston unit 30 may be operated.

As shown in FIG. 2, the cam piston unit 30 may be installed at a center of the pump body 10 so as to be rotated by the driving unit 40, the cam piston unit 30 may rotate eccentrically so as to repeatedly push and operate an end portion of the pump element 20, and one or a plurality of pump elements 20 may be disposed on an outer side of the cam piston unit 30.

As shown in FIGS. 3 and 4, the cam piston unit 30 may include a cam cover 32, a unidirectional rotation member 34 formed on an inner side of the cam cover 32, and a rotation direction restriction member 36 for restricting a rotation direction of the unidirectional rotation member 34 while preventing reverse rotation.

The cam cover 32 may have one outer portion making contact with the piston 23 of the pump element 20, and the unidirectional rotation member 34 may include teeth formed on an outer side of the unidirectional rotation member 34 and inclined in only one direction. The rotation direction restriction member 36 may enable the cam piston unit 30 to rotate by passing over an inclined portion of the teeth formed on the unidirectional rotation member 34, and may be fitted between the teeth so as to prevent the reverse rotation of the cam piston unit 30.

The driving unit 40 may be a configuration that operates the cam piston unit 30, and may include a motor (not shown) and at least one gear (not shown). In this case, the driving unit 40 may be controlled by the controller unit C described above.

As shown in FIG. 1, the driving unit 40 may be installed on an inner side of the second pump body 14 of the pump body 10, and the motor of the driving unit 40 may receive electric power from the outside to generate power and transmit the generated power to the at least one gear. The gear may transmit the power received from the motor to the cam piston unit 30, and, as the cam piston unit 30 rotates, the pump element 20 may be operated.

The grease container 50 may be a storage filled with the grease to store the grease. As shown in FIG. 1, the grease container 50 may be installed in an upper portion of the pump body 10 to have a three-dimensional shape with a predetermined inner space.

Preferably, the grease container 50 may be formed to be transparent or translucent so that the grease stored in the grease container 50 may be recognized with naked eyes from the outside, and may be formed as a cylinder with a predetermined diameter and a predetermined height, similar to the pump body 10.

The grease agitation unit 52 may be formed inside the grease container 50. The grease agitation unit 52 may be rotated by the driving unit 40 to agitate the grease stored in the grease container 50, and push the grease into the pump element 20. The grease agitation unit 52 may include a rotation shaft 52a connected to the driving unit 40 so as to axially rotate at a center of the grease container 50, and a rotation blade 52b coupled to an outer side of the rotation shaft 52a so as to rotate in the inner space of the grease container 50.

A grease container cover 54 may be formed in an upper portion of the grease container 50. The grease container cover 54 may block an open portion of the grease container 50 and protect an inside of the grease container 50.

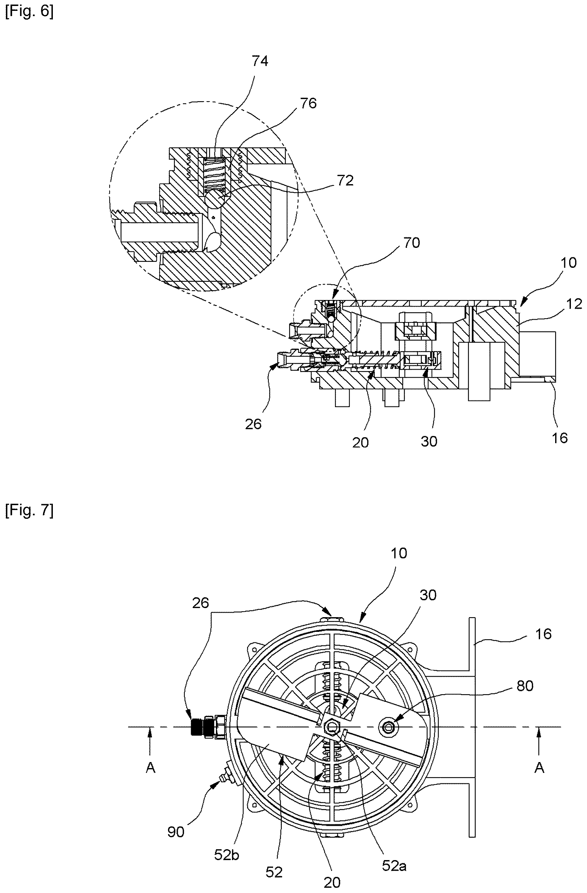

FIG. 5 is an assembly view showing a pump body and a discharge pressure overload adjustment valve of the multi-function automatic grease injection pump having the independently driven multi-stage structure according to the embodiment of the present disclosure, and FIG. 6 is a sectional view showing the pump body and the discharge pressure overload adjustment valve of the multi-function automatic grease injection pump having the independently driven multi-stage structure according to the embodiment of the present disclosure.

The multi-function automatic grease injection pump having the independently driven multi-stage structure according to the embodiment of the present disclosure may further include a discharge pressure overload adjustment valve 70, which is a relief valve having an intemal grease recovery structure for excessive pressure discharge.

In other words, an overload stabilization device may be installed to protect the pump element 20 when a terminal region of the grease is clogged or an excessive back pressure is formed, and a reverse check valve having a structure in which the grease is discharged to the outside when an excessive pressure is formed may be used. However, inconvenience of the user may be caused by extemal contamination. Therefore, when an excessive pressure is formed, the grease that is reversely discharged may be automatically recovered into the grease container, and only an indicator function for indicating an abnormality state may be added to the controller unit so that management may be performed in a clean environment.

As shown in FIGS. 5 and 6, the discharge pressure overload adjustment valve 70 may be a configuration for recovering the grease inside the pipe into the grease container 50 when the pump operates at a preset pressure or more, and may include a valve ball 72 for opening or closing the high-pressure discharge port, a valve spring 74 for elastically supporting the valve ball 72, and a spring guide 76 that surrounds the valve spring 74 from an outer side.

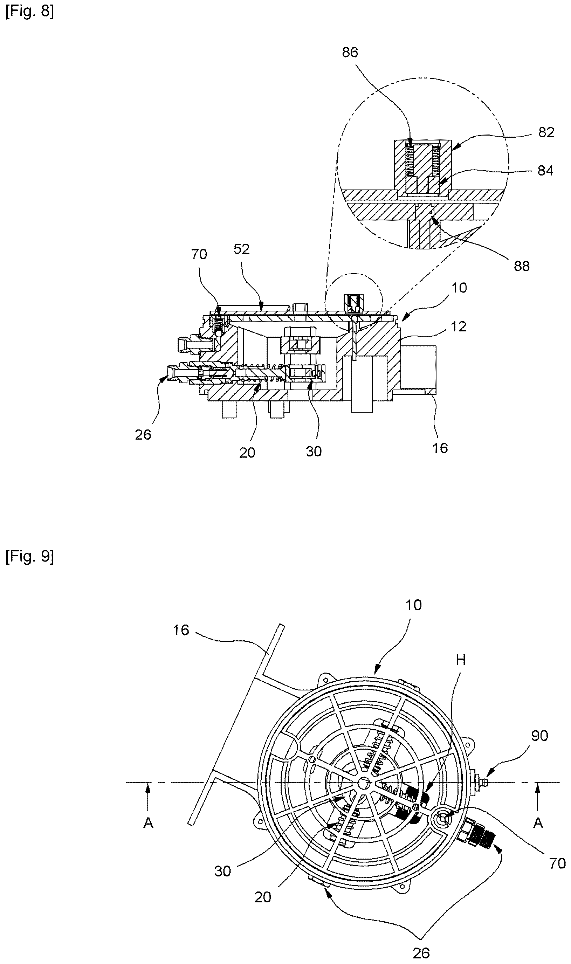

FIG. 7 is an assembly view showing the pump body and a level sensor unit of the multi-function automatic grease injection pump having the independently driven multi-stage structure according to the embodiment of the present disclosure, and FIG. 8 is a sectional view showing the pump body and the level sensor unit of the multi-function automatic grease injection pump having the independently driven multi-stage structure according to the embodiment of the present disclosure.

The multi-function automatic grease injection pump having the independently driven multi-stage structure according to the embodiment of the present disclosure may further include a level sensor 80 for detecting a grease level for refilling of the grease.

In other words, a refillable grease pump may generally require refilling of the grease for use after a predetermined amount of grease is used. However, refilling may cause various inconvenient incidentals. Accordingly, when foreign substances is inserted during the refilling of the grease or the grease level is less than or equal to a predetermined level, the grease level has to be automatically notified to the outside so that the grease may be refilled within an appropriate time. In this case, a constant-pressure magnetic spring indicator having a structure capable of constantly detecting a low level of the grease during grease agitation may be mounted on a back side of the rotation grease agitation unit 52, and the spring may operate so as to operate a grease magnet level switch fixed on an opposite side, and notify the controller unit C to allow control when the grease level is the low level for a predetermined time or more.

As shown in FIGS. 7 and 8, the level sensor unit 80 may be a configuration f for continuously checking the level of the grease stored in the grease container 50, and may include a level sensor body 82, a level sensor magnet 84 installed on an inner side of the level sensor body 82, a level sensor spring 86 for providing elasticity to the level sensor magnet 84, and a level sensor 88 formed on an opposite side of the level sensor spring 86 so as to detect the grease level.

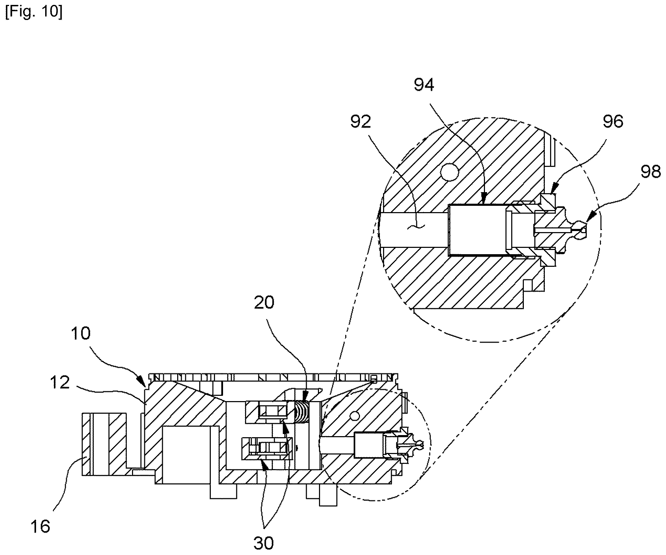

FIG. 9 is an assembly view showing the pump body and a grease injection unit of the multi-function automatic grease injection pump having the independently driven multi-stage structure according to the embodiment of the present disclosure, and FIG. 10 is a sectional view showing the pump body and the grease injection unit of the multi-function automatic grease injection pump having the independently driven multi-stage structure according to the embodiment of the present disclosure.

The multi-function automatic grease injection pump having the independently driven multi-stage structure according to the embodiment of the present disclosure may further include a grease injection unit 90 for refilling the grease.

As shown in FIGS. 9 and 10, the grease injection unit 90 may include a grease filling hole 92 connected to the grease container 50, which is an inlet for refilling the grease into the grease container 50, a mesh net 94 formed on an inner side of the grease filling hole 92 to prevent introduction of foreign substances, a mesh bolt 96 configured to fix the mesh net 94 and having one end portion provided with a cover formed with mesh, and a grease nipple 98 coupled to the mesh bolt 96 and having an injection port through which the grease is injected. In this case, the grease injection unit 90 may have a dual filter function through the mesh net 94 and the mesh bolt 96 during the refilling of the grease. As described, a grease filter may be built into the multi-function automatic grease injection pump so as to ensure that the grease is injected through the filter during the refilling of the grease, so that the introduction of foreign substances may be prevented. Preferably, the filter may have a reusable structure.

Although the present disclosure has been described with reference to the accompanying drawings, the above description corresponds to merely one embodiment among various embodiments including the gist of the present disclosure, and is intended to enable a person having ordinary skill in the art to easily practice the present disclosure, so that it is clear that the present disclosure is not limited only to the embodiments described above. Therefore, the scope of the present disclosure is to be interpreted by the appended claims, and construed as encompassing all technical ideas within the scope of equivalents thereof obtained by change, substitution, replacement, and the like without departing from the gist of the present disclosure. In addition, it is clearly stated that some configurations in the drawings are exaggerated or reduced as compared with actual configurations in order to more clearly describe the configuration.

### Description of Reference Numerals

| | | | |
|---|---|---|---|
| 10: | Pump body | 20: | Pump element |
| 22: | First stage pump element | 23: | Piston |
| 24: | Second stage pump element | 26: | Discharge port |
| 30: | Cam piston unit | 40: | Driving unit |
| 50: | Grease container | 52: | Grease agitation unit |
| 60: | Direction change valve | 70: | Discharge pressure overload adjustment valve |
| 80: | Level sensor unit | 90: | Grease injection unit |
| C: | Controller unit | H: | Heat generation device |

## Claims

1. A multi-function automatic grease injection pump including multiple discharge ports and having an independently driven multi-stage structure, the multi-function automatic grease injection pump comprising:
a pump body;
a pump element installed in the pump body, configured to discharge grease through a discharge port, and having an independently driven multi-stage structure in a vertical or horizontal direction;
a cam piston unit having an independently driven multi-stage structure corresponding to the pump element, and having a counter-rotation prevention structure that operates in only one direction according to each of set directions;
a driving unit for driving the cam piston unit; and
a grease container filled with the grease to store the grease, and including a grease agitation unit for agitating the grease,
wherein, when the pump element in one stage operates, the pump element in another stage does not operate so as to be in a stationary state.

2. The multi-function automatic grease injection pump of claim 1, wherein the pump element includes a first stage pump element and a second stage pump element,
each of the first stage pump element and the second stage pump element constitutes one or a plurality of pump elements, and
the discharge port has one or a plurality of discharge duct paths.

3. The multi-function automatic grease injection pump of claim 1, wherein a direction change valve is mounted on the discharge port, and,
when the direction change valve operates, a grease discharge amount is automatically changed while a direction of a grease discharge duct path is changed.

4. The multi-function automatic grease injection pump of claim 1, wherein a heat generation device for generating heat is formed at a periphery of a suction port of the pump element, and
the heat generation device constantly generates heat having a predetermined temperature or more to maintain the grease at a predetermined viscosity when the pump element operates.

5. The multi-function automatic grease injection pump of claim 1, wherein a discharge pressure overload adjustment valve is formed adjacent to the pump element, and,
when a back pressure corresponding to a predetermined pressure or more is generated in the pump element, the grease is forcibly recovered into the container through the discharge pressure overload adjustment valve.

6. The multi-function automatic grease injection pump of claim 1, wherein a level sensor unit for detecting a grease level inside the grease container is formed in an agitator of the grease agitation unit, and,
the level sensor unit detects whether the grease level becomes less than or equal to a predetermined level so as to emit a signal.

7. The multi-function automatic grease injection pump of claim 1, wherein, when a combination of pump elements is configured in the horizontal direction, different discharge schemes and functions are maintained for different types of grease.
